# EUROPEAN PATENT APPLICATION

(11) **EP 2 003 536 A1**
(43) Date of publication of application: **17.12.2008**
(21) Application number: 08158048.2
(22) Date of filing: 11.06.2008
(51) Int. Cl.: G06F 3/023, G06F 3/048

(54) **Character input assist method, character input assist system, character input assist program, user terminal, character conversion method and character conversion program**

(30) Priority: 14.06.2007 JP 2007157646; 30.04.2008 JP 2008118794
(71) Applicant: NTT DoCoMo, Inc., Chiyoda-ku Tokyo 100-6150 (JP)
(72) Inventor: Torii, Daisuke, Tokyo 100-6150 (JP); Kunito, Goro, Tokyo 100-6150 (JP); Yamazaki, Kenichi, Tokyo 100-6150 (JP)
(74) Representative: Rupp, Christian

(57) **Abstract**

The present invention enables character conversion at a low cost for a contents provider and with a high convenience for a user. In a character input assist system, text data assigned with an identifier and indicating the class of text entry field are sent from a Web server, and the identifier is acquired as class information from the text data received by a class acquisition unit of a character input assist device. In a reference unit, dictionary information corresponding to the class information acquired by the class acquisition unit is acquired with reference to a storage unit. Text data with dictionary information embedded therein are output from an output unit to a user terminal. In the user terminal, when text data are acquired and displayed using a browser, and character input is performed, the search is conducted by a dictionary search unit using a dictionary specified by the dictionary information, and conversion candidates are displayed on a display unit.

## Description

### BACKGROUND OF THE INVENTION

### Field of the Invention

The present invention relates to a character input assist method, a character input assist system and a character input assist program that assist in dictionary-using conversion of characters input in a text entry field of text data, as well as a user terminal, a character conversion method, and a character conversion program that input characters into a character entry field of text data and perform conversion using a dictionary.

### Related Background of the Invention

The number of services provided via a network (network services) that use portable terminals, such as cellular phones, and are similar to services that can be received by a desktop PC, e.g. shopping or search services, has increased in recent years. However, because portable terminals are generally small, the size of input interfaces such as input keys or screens is restricted, and there are more limitations placed on character input than in the typical desktop PC. For this reason, providing a character input assist method that facilitates conversion from Japanese alphabet to Chinese characters in order to facilitate the input of characters is important for contents providers of the aforementioned services in order to advance the use of the services by the portable terminal users.

A character input estimation and conversion method is well known as the character input assist method. Further, an input assist method that indicates fixed phrases correspondingly to the input items that have been determined in advance has also been investigated. For example, Japanese Patent Application Laid-open Publication No. 2002-244793 suggests a method for switching fixed phrase candidates (dictionary) indicated for each mail item (address, name, title).

### SUMMARY OF THE INVENTION

The character input assist method such as described in Japanese Patent Application Laid-open Publication No. 2002-244793 represents important technology for portable terminals because this method facilitates the selection of conversion candidates. However, when this method is applied to a network service, the text data relating to the network service is provided as contents, thereby placing a significant load on the contents provider. For example, when characters are input in a text entry field of text data in a network service, a special dictionary corresponding to the text entry field and a program that accesses the corresponding dictionary according to the input from the user have to be provided to access the dictionary corresponding to the text entry field when the characters are input in the text entry field of text data in the network service. The contents provider that provides the text data has to bear the cost associated with the design and installation of these programs and administration of the dictionaries. Further, there are a variety of network services, in addition to mailing, that use the portable terminal and the contents provider is not necessarily capable of bearing the cost thereof. In particular, it is not easy to create a special dictionary for each text entry field. Moreover, because access to special dictionaries is generated for each input from the user, the load on the dictionary server is rather high and maintenance cost thereof cannot be ignored. Although Japanese Patent Application Laid-open Publication No. 2002-244793 discloses a method for directly designating the URI (Uniform Resource Identifier) of the saving location of the corresponding dictionary, this method is not perfect because in some cases the appropriate dictionary cannot be used.

The present invention is intended to solve the above-mentioned problem, and an object is to provide a character input assist method, a character input assist system, and a character input assist program that enable character conversion at a low cost for a contents provider and with a high convenience for a user, and also to provide a user terminal, a character conversion method, and a character conversion program for using the character input assist method of the present invention.

In order to attain the above-described object, the present invention provides a character input assist method based on a character input assist system that assists in dictionary-using conversion of characters input in a text entry field of text data and comprises storage means for storing information indicating a relationship between class information indicating a class of the text entry field and dictionary information specifying a dictionary to be used for converting the characters input in the text entry field, the method having: a class acquisition step of acquiring the class information from the text data; a reference step of acquiring dictionary information corresponding to the class information with reference to information stored in the storage means based on the class information acquired in the class acquisition step; and an output step of outputting the dictionary information acquired in the reference step.

With the character input assist method in accordance with the present invention, storage means for storing information indicating the relationship between class information indicating a class of a text entry field and dictionary information specifying the dictionary to be used in the text entry field is provided in advance, and the dictionary used for converting characters input in the text entry field of text data is specified by the information stored in the storage means. Therefore, text data do not require a special dictionary to be associated with the text entry field in advance. Further, when the contents provider that provided text data creates the text data that are the contents of the network service, character conversion can be performed that uses a dictionary corresponding to a text entry field even when a special dictionary for converting the characters of the text entry field is not prepared. Thus, with the character input assist method in accordance with the present invention, character conversion at a low cost for the contents provider and with a high convenience for the user can be realized.

It is preferred that in the class acquisition step, an identifier embedded in the text data in association with the text entry field be acquired as the class information. By acquiring the identifier embedded in association with the text entry field as the class information, it is possible to perform reliably the character input assist method in accordance with the present invention.

Further, in the class acquisition step, information indicating a saving location of the text data may be acquired as the class information. Accordingly, because the information indicating a saving location of the text data is by itself handled as the class information, the character input assist method in accordance with the present invention can be realized without embedding an identifier that has been associated in advance with the text entry field in the text data. Therefore, the cost for the contents provider can be further reduced.

It is also preferred that in the output step, the dictionary information be embedded in the text data in association with the text entry field and output together with the text data. By embedding the dictionary information directly in the text data, it is possible to select adequately dictionary information when the dictionary information is used in relationship with the characters input in the text entry field. Therefore, the character input assist method in accordance with the present invention can be implemented reliably.

Further, it is preferred that in the output step, a program for searching conversion candidates for characters input in the text entry field of the text data from a dictionary specified by the dictionary information be embedded in the text data. In this case, by providing a program for searching from a dictionary specified by dictionary information in the text data in advance, it is possible to perform easily the search of conversion candidates for the characters input in the text entry field.

It is also preferred that in the output step, the dictionary information be output as data separate from the text data. In this case, because the dictionary information can be handled as data separate from the text data, the handling range can be expanded. For example, only the dictionary information can be edited.

It is also preferred that in the class acquisition step, the class information of the text entry field be acquired from text data in HTML (HyperText Markup language) format. Because HTML is a typical language used in network servicing, where the text data are recorded in the HTML, a large number of users can use the character input assist method in accordance with the present invention. Therefore, a character input assist method that is more convenient for the users is provided.

The character input assist method in accordance with the present invention preferably further has a dictionary search step of searching and outputting conversion candidates for characters input in the text entry field of the text data from a dictionary specified by the dictionary information output in the output step. By providing the aforementioned dictionary search step, it is possible to search and output conversion candidates for the characters input in the text entry field within the text data by using an adequate dictionary. Therefore, a character input assist method that is highly convenient for the users can be provided.

In another possible implementation mode, the character input assist method in accordance with the present invention further has an output request reception step of receiving an output request for text data sent from a user terminal, wherein in the class acquisition step, the class information is acquired from the text data relating to the output request received in the output request reception step, and in the output step, the dictionary information acquired in the reference step is output to the user terminal that has sent the output request. In this case, the dictionary information corresponding to the text entry field is output based on the output request for the text data from the user terminal. Therefore, a highly convenient character input assist method that is adapted to users' requirements can be provided.

In another possible implementation mode, in the output request reception step, information indicating an attribute of a user of the user terminal is received together with the text data output request, and in the reference step, dictionary information corresponding to the class information is acquired with reference to information stored in the storage means, based on the information indicating the user attribute that is received in the output request reception step. In this case, the dictionary information is output that is based on information indicating the attribute of the user handling the user terminal that is sent together with the output request from the user terminal. Therefore, when character conversion is performed using the dictionary specified by the dictionary information, the character candidates that are better suited to the user attribute can be displayed. Therefore, a character input assist method that is highly convenient for the user can be provided.

Further, a history of output requests of the text data from the user terminal that are received in the output request reception step may be taken as the information indicating the user attribute. In this case, the dictionary information is output based on the history of output request submission by the user for the text data in the past. Therefore, information specifying the dictionary that is rich with terms in the field of text data that is frequently used by the user is output as dictionary information and a large number of conversion candidates relating to this field are displayed when the characters input in the text entry field are converted. Therefore, a character input assist method that is more convenient for the user can be provided.

Further, in another possible implementation mode, in the output request reception step, position information of the user terminal is received together with the text data output request, and in the reference step, dictionary information corresponding to the class information is acquired with reference to information stored in the storage means, based on the position information received in the output request reception step. Because dictionary information based on the position information of user terminal sent together with the output request from the user terminal is output correspondingly to the text entry field, the dictionary information corresponding to the location of user terminal is output. Therefore, when character conversion is performed, a dictionary having conversion candidates that are more frequently used by the user is employed. As a result, a character input assist method that is highly convenient for the user can be provided.

In the character input assist method in accordance with the present invention, the storage means can store information specifying the output sequence of words contained in the dictionary, in the reference step, information stored in the storage means and specifying an output sequence of words contained in the dictionary specified by the acquired dictionary information can be acquired, and in the output step, information specifying the output sequence of words contained in the dictionary specified by the dictionary information can be output. In this case, the output sequence of words is specified together with dictionary information, and when character conversion is performed, conversion candidates are displayed, for example, in the order of frequency of use by the user. Therefore, a character input assist method that is highly convenient for the user can be provided.

In another possible implementation mode, the character input assist method in accordance with the present invention further has an output request reception step of receiving an output request for text data that is sent from a user terminal, in the class acquisition step, the class information is acquired from the text data relating to the output request received in the output request reception step, and in the output step, information specifying the output sequence of words contained in the dictionary specified by the dictionary information is output to the user terminal that has sent the output request. In this case, the dictionary information corresponding to the text entry field is output and the output sequence of words contained in the dictionary specified by the dictionary information is also output. Therefore, a character input environment that is more convenient for the user is provided.

In another possible implementation mode, in the output request reception step, information indicating an attribute of a user of the user terminal is acquired, and in the reference step, information specifying the output sequence of words contained in the dictionary specified by the dictionary information is created based on the information indicating the user attribute acquired in the output request reception step. In this case, dictionary information based on the information indicating the attribute of the user handling the user terminal that is sent from the user terminal is output and information specifying the output sequence of words contained in the dictionary specified by this dictionary information is also output. Therefore, when character conversion is performed using the dictionary specified by the dictionary information, the conversion candidates are output, for example, in the order of frequency of use correspondingly to the user attribute. Therefore, a character input assist method that is highly convenient for the user can be provided.

In another possible implementation mode, a history of output requests of the text data from the user terminal that are received in the output request reception step is taken as the information indicating the user attribute. In this case, dictionary information and information specifying the output sequence of conversion candidates are output based on the history of output requests submitted by the user for text data in the past. Therefore, when characters input in the text entry field are converted, character candidates that correspond, for example, to operation mode of the user are preferentially output. Therefore, a character input assist method that is more convenient for the user can be provided.

In another possible implementation mode, in the output request reception step, position information of the user terminal is received together with the text data output request, and in the reference step, information specifying the output sequence of words contained in the dictionary specified by the dictionary information is created based on the position information received in the output request reception step. In this case, dictionary information created based on the position information of the user terminal is acquired and information specifying the output sequence of conversion candidates is also created. Therefore, for example, conversion candidates that are assumed to be used more frequently are output according to the present location of user terminal. Therefore, convenience for the user can be further increased.

Further, it is preferred that in the dictionary search step, conversion candidates for characters input in the text entry field be searched from the dictionary and output based on the information specifying the output sequence. In this case, conversion candidates for the characters input in the text entry field of text data can be searched using an adequate dictionary and output based on an adequate output sequence based on the information specifying the output sequence. Therefore, a character input assist method that is highly convenient for the user can be provided.

The character input assist method in accordance with the present invention can be also described, as shown hereinbelow, as the invention relating to a character input assist system and an invention relating to a character input assist program.

Thus, the character input assist system in accordance with the present invention has storage means for storing information indicating a relationship between class information indicating a class of the text entry field and dictionary information specifying a dictionary to be used for converting the characters input in the text entry field; class acquisition means for acquiring the class information from the text data; reference means for acquiring dictionary information corresponding to the class information with reference to information stored in the storage means based on the class information acquired by the class acquisition means; and output means for outputting the dictionary information acquired by the reference means.

Further, the character input assist program in accordance with the present invention causes a computer to function as: storage means for storing in formation indicating a relationship between class information indicating a class of the text entry field and dictionary information specifying a dictionary to be used for converting the characters input in the text entry field; class acquisition means for acquiring the class information from the text data; reference means for acquiring dictionary information corresponding to the class information with reference to information stored in the storage means based on the class information acquired by the class acquisition means; and output means for outputting the dictionary information acquired by the reference means.

The user terminal in accordance with the present invention has text acquisition means for, acquiring text data having a text entry field and dictionary information specifying a dictionary to be used for converting characters input in the text entry field; and dictionary search means for searching and outputting conversion candidates for characters input in the text entry field of text data acquired by the text acquisition means from a dictionary specified by the dictionary information acquired by the text acquisition means. In the user terminal, the text data and dictionary information are acquired and conversion candidates for the characters input from the dictionary specified by the dictionary information into the text entry field are searched and output, thereby making it possible to perform adequate conversion based on the dictionary corresponding to the text entry field. Therefore, with the user terminal in accordance with the present invention, a conversion function that is highly convenient for the user can be provided.

Further, it is preferred that the dictionary search means perform searching of an external dictionary specified by the dictionary information. By searching an external dictionary, it is possible to increase the number of selection branches for the dictionaries used for converting the characters input in the text entry field of text data. As a result, a character input assist method that is more convenient for the user can be provided.

The user terminal in accordance with the present invention can be also described, as shown hereinbelow, as the invention relating to a character conversion method in a user terminal and an invention relating to a character conversion program.

Thus, the character conversion method for performing dictionary-using conversion of characters input in a text entry field of text data in a user terminal in accordance with the present invention has: a text acquisition step of acquiring text data having a text entry field and dictionary information specifying a dictionary to be used for converting characters input in the text entry field; and a dictionary search step of searching and outputting conversion candidates for characters input in the text entry field of text data acquired in the text acquisition step from a dictionary specified by the dictionary information acquired in the text acquisition step.

Further, the character conversion program for performing dictionary-using conversion of characters input in a text entry field of text data in a user terminal in accordance with the present invention causes a computer to function as: text acquisition means for acquiring text data having a text entry field and dictionary information specifying a dictionary to be used for converting characters input in the text entry field; and dictionary search means for searching and outputting conversion candidates for characters input in the text entry field of text data acquired by the text acquisition means from a dictionary specified by the dictionary information acquired by the text acquisition means.

In accordance with the present invention, character conversion that is highly convenient for the user can be performed at a low cost for the contents provider.

### BRIEF DESCRIPTION OF THE DRAWINGS

FIG. 1 illustrates the constitution of the character input assist system of the first embodiment of the present invention;
FIG. 2 illustrates the hardware constitution of Web server and character input assist device in the embodiment of the present invention;
FIG. 3 illustrates the hardware constitution of the user terminal in the embodiment of the present invention;
FIG. 4 is a sequence diagram illustrating the processing (character input assist method) executed in the character input assist system in the first to third embodiments of the present invention;
FIG. 5 is a display example of the text entry field of text data sent from the Web server in the first embodiment of the present invention;
FIG. 6 is a description example of the text entry field of text data sent from the Web server in the first embodiment of the present invention;
FIG. 7 is an embedding example of dictionary information in the text data in the first embodiment of the present invention;
FIG. 8 is a conversion candidate example in the user terminal using the text data having the dictionary information embedded therein in the first embodiment of the present invention;
FIG. 9 illustrates the constitution of the character input assist system in the second embodiment of the present invention;
FIG. 10 is an embedding example of a program in the text data in the second embodiment of the present invention;
FIG. 11 is a conversion candidate example in the user terminal using the text data having the program embedded therein in the second embodiment of the present invention;
FIG. 12 illustrates the constitution of the character input assist system in the third embodiment of the present invention;
FIG. 13 is a description example of additional dictionary information in the third embodiment of the present invention;
FIG. 14 illustrates the constitution of the character input assist system in the fourth embodiment of the present invention;
FIG. 15 is an example of a dictionary that is used when characters input in the text entry field are converted in the user terminal of the fourth embodiment of the present invention;
FIG. 16 illustrates an example of a data file that is stored in the storage unit and sent to the reference unit correspondingly to the class information sent from the reference unit in the fourth embodiment of the present invention;
FIG. 17 illustrates another example of a data file that is stored in the storage unit and sent to the reference unit correspondingly to the class information sent from the reference unit in the fourth embodiment of the present invention;
FIG. 18 is an example of personal additional dictionary information produced for the user for which the category is "young" in the fourth embodiment of the present invention;
FIG. 19 is a sequence diagram illustrating the processing (character input assist method) executed in the character input assist system in the fourth embodiment of the present invention;
FIG. 20 is a table illustrating the correspondence between the age of the user and the corresponding category in the fourth embodiment of the present invention;
FIG. 21 illustrates the constitution of the character input assist program of an embodiment of the present invention; and
FIG. 22 illustrates the constitution of the character input assist program of an embodiment of the present invention.

### DESCRIPTION OF THE PREFERRED EMBODIMENTS

The preferred embodiments of the present invention will be described below with reference to the appended drawings. In the explanation of the drawings, identical elements are assigned with identical reference numerals and redundant explanation thereof is omitted.

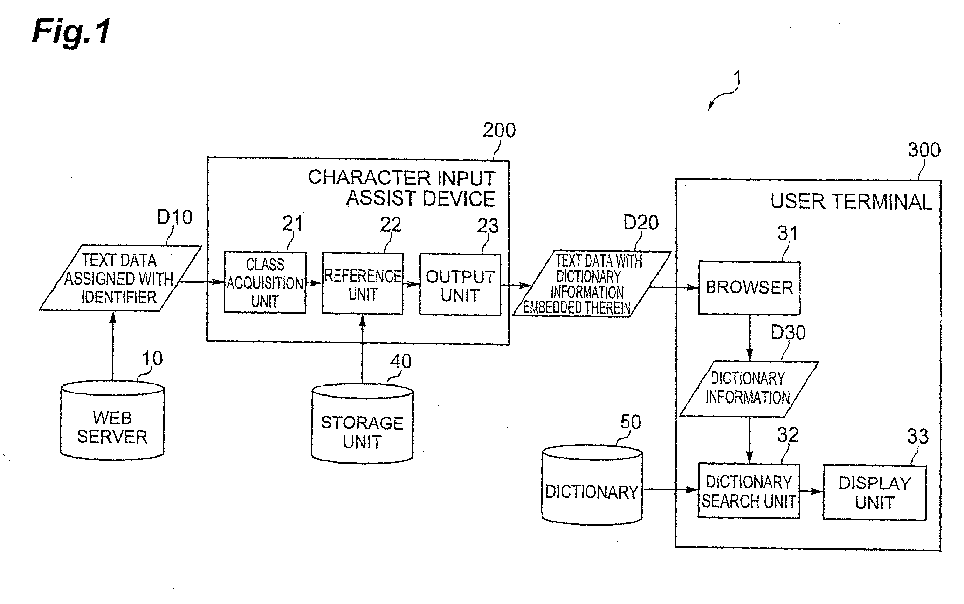

FIG. 1 shows a constitution of a character input assist system and the connection relationship thereof in the first embodiment of the present invention. The character input assist system 1 comprises a Web server 10 that provides text data such as contents of a network service, a character input assist device 200 that processes the text data received from the Web server 10 and sends the resultant information to a user terminal 300, a storage unit 40 that is referred to during processing of the text data in the character input assist device 200, a user terminal 300 that handles the processed text data, and a dictionary 50 that is referred to by the user terminal 300. The Web server 10 and the character input assist device 200, the character input assist device 200 and storage unit 40, the character input assist device 200 and user terminal 300, and the user terminal 300 and dictionary 50 are connected via respective internal networks such as LAN (Local Area Network) or wide-band network such as a mobile communication network or internet, thereby enabling the exchange of information between these devices.

The Web server 10 shown in FIG. 1 is a device that provides text data for displaying a Web page serving as contents of the network service. The Web server 10 accumulates the text data that have been produced in advance by a contents provider and sends the corresponding text data in response to a transmission request from the user terminal 300 to the user terminal 300 via the character input assist device 200.

The text data in the present embodiment have a text entry field for inputting characters in the user terminal 300. This text entry field is used, for example, when the user sends information to the Web server, and by inputting characters into the text entry field, it is possible to send the input contents to the Web server. When an identifier is used as class information, the identifier is assigned in advance to the text data by, for example, the contents provider that provides the Web server 10. The text data are represented, for example, by HTML.

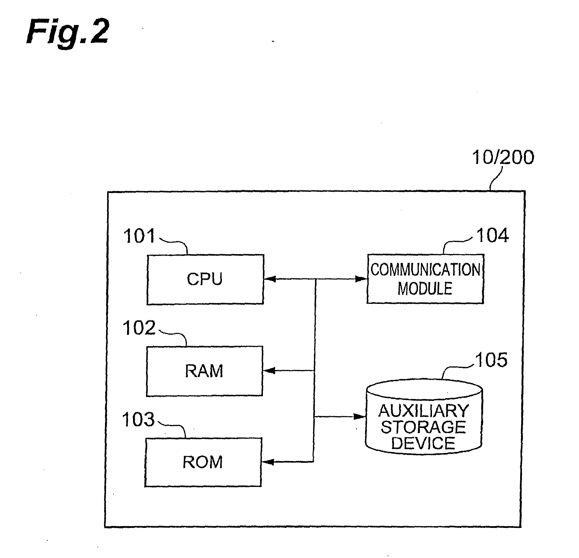

As shown in FIG. 2, the Web server 10 is constituted as a computer comprising hardware such as a CPU (Central Processing Unit) 101, a RAM (Random Access memory) 102 that is the main storage device, a ROM (Read Only Memory) 103, a communication module 104 for performing communication, and an auxiliary storage device 105 such as a hard disk. The operation of these structural elements makes it possible for the server to function as a contents providing device of network service.

The character input assist device 200 processes the text data received from the Web server and assists in the conversion of the characters input in the text entry field of the text data by using the dictionary. More specifically, the character input assist device 200 is realized as a proxy for accessing the Web server 10 from the user terminal 300. As shown in FIG. 2, the character input assist device 200 is constituted as a computer comprising hardware such as the CPU 101, RAM 102, ROM 103, communication module 104, and auxiliary storage device 105. The operation of these structural elements makes it possible for the character input assist device to demonstrate the below-described character input assist function of the present embodiment.

As shown in FIG. 1, the character input assist device 200 comprises a class acquisition unit 21, a reference unit 22, and an output unit 23.

The class acquisition unit 21 functions as class acquisition means for receiving the text data sent from the Web server 10 and acquiring the class information indicating the class of the text entry field. The reception of the text data is performed by receiving a transmission request from the text data from the user terminal 300 and sending the transmission request to the Web server 1.0. The class of the text entry field as referred to herein is information indicating the kind of information that has to be input in the text entry field. Examples of classes of text entry field include a name of location and a type of business. The class acquisition unit 21 acquires an identifier associated with the text entry field and embedded in the text data or, for example, information indicating the storage location of the text data such as URI, as the class information indicating the class of the text entry field and sends this identifier or information to the reference unit 22.

The reference unit 22 functions as reference means for referring to the information stored in the storage unit 40 based on the class information of the text entry field acquired from the class acquisition unit 21 and acquires the dictionary information corresponding to the class information. The dictionary information is information specifying a dictionary to be used for converting the characters input in the text entry field. Examples of dictionary information include information (URI and the like) indicating the dictionary storage location. Further, the dictionary information may be not only the information indicating the location on a network, such as URI, but also information indicating the storage location of the dictionary 50 in the user terminal 300. The reference unit 22 sends the acquired dictionary information to the output unit 23.

The output unit 23 functions as output means for outputting dictionary information acquired by the reference unit 22. More specifically, in the present embodiment, the output of the dictionary information is performed by embedding the dictionary information acquired in the reference unit 22 to the text data in association with the text entry field, and sending the text data together with the dictionary information to the user terminal 300.

The user terminal 300 is a device that is used by the user and actually serves to receive the network service. The user terminal 300 can handle the text data sent from the character input air device 200 and the dictionary data. More specifically, the user terminal 300 is realized as a device having a communication function such as a cellular phone, a PDA (Personal Digital Assistant), or a notebook personal computer. The user terminal 300 also has a function of inputting characters by the user's operations. In addition, the user terminal 300 has a function of converting the input characters. The conversion of characters means, for example, the conversion of Japanese alphabet into Chinese characters.

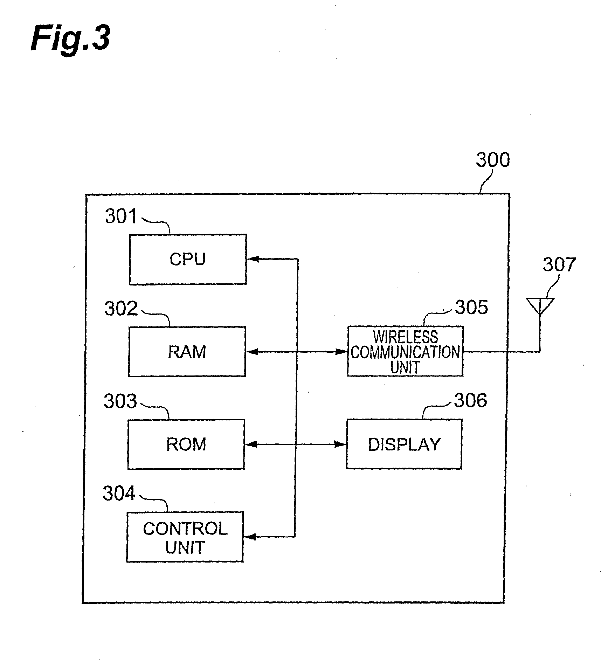

FIG. 3 shows a hardware constitution of the user terminal 300. The user terminal 300 is composed of a CPU 301, a RAM 302, a ROM 303, an operation unit 304, a wireless communication unit 305, a display 306, and an antenna 307. The operation of these structural elements makes it possible to demonstrate the below-described functions of the user terminal 300.

As shown in FIG. 1, the user terminal 300 is constituted by a browser 31, a dictionary search unit 32, and a display unit 33.

The browser 31 sends a transmission request for text data in response to the user's operation or the like via the character input assist device 200 to the Web server 10, and receives the text data sent from the Web server 10 in response to the transmission request. Thus, the browser 31 functions as text acquisition means for acquiring the text data having a text entry field that are received from the character input assist device 200 and also acquiring the dictionary information used for converting the characters input in the text entry field. When the dictionary information is contained in the information sent from the character input assist device 200, the browser 31 sends the dictionary information to the dictionary search unit 32. The browser 31 also has a function of application software for perusing a Web page that is text data and also can display the information displayed by the display unit 33 as a Web page. Further, the browser 31 can also have a function of reading, executing and displaying the program-assigned text data such as JavaScript-assigned HTML text.

The dictionary search unit 32 functions as dictionary search means for searching and outputting a conversion candidate for the character input into the text entry field of the text data acquired by the browser 31 from the dictionary specified by the dictionary information acquired by the browser 31.

The display unit 33 is means for displaying the conversion candidate for the character input to the text entry field that has been output by the dictionary search unit 32.

The storage unit 40 shown in FIG. 1 functions as storage means for storing the information indicating the relationship between the class information indicating the class of a text entry field and the dictionary information specifying the dictionary to be used for converting the characters input into the text entry field. The storage unit 40 is realized, for example, as a text file or database system and can be mounted, e.g., on a server installed on a network.

Further, the dictionary 50 shown in FIG. 1 is data to be used when converting the characters input in the text entry field. For example, the dictionary 50 stores the information indicating the correspondence relationship between characters (Japanese alphabet and numerical symbols) and the conversion candidates for these characters. In the character input assist system 1 of the present embodiment, a plurality of dictionaries 50 are included correspondingly to the type of text entry fields.

The dictionary 50 is realized, for example, as a text file or a database and can be mounted, e.g., on a server installed on a network. By searching the external dictionary 50 of the user terminal 300 in this way when the characters are converted, the number of selection branches of the dictionary used for converting the characters input into the text entry field of text data is increased, thereby providing a character input assist method that is more convenient for the user. Further, a built-in dictionary that is provided in advance in the user terminal 300, or a download dictionary that is downloaded from the outside and saved may be also used as the dictionary 50.

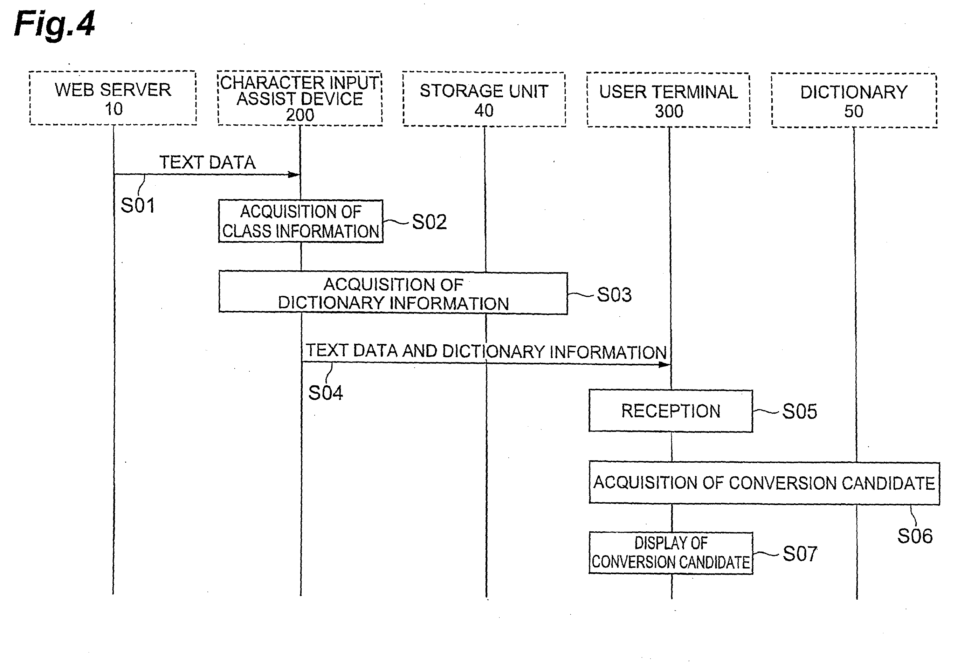

Here, the character input assist processing (character input assist method) of text data containing a text entry field that is based on the character input assist system 1 of the first embodiment will be described below using a sequence diagram shown in FIG. 4. The character conversion method performed with the user terminal 300 is also included in the aforementioned character input assist processing.

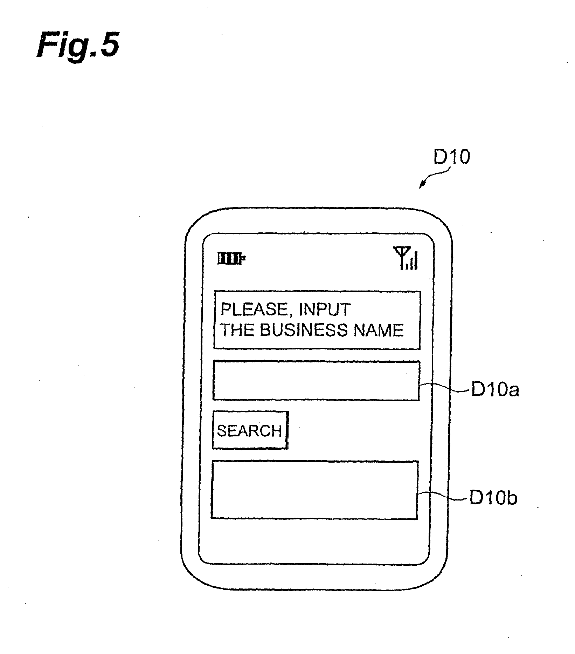

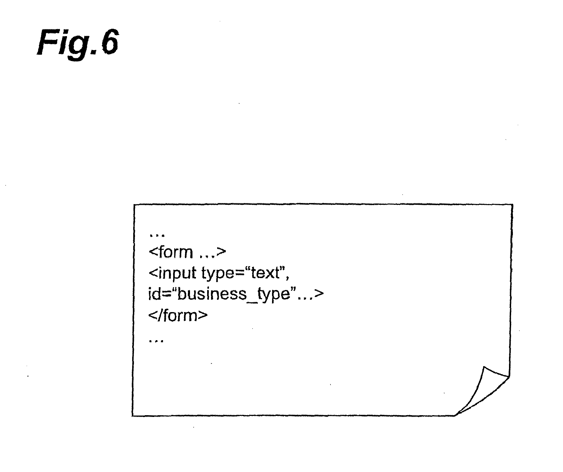

First, the Web server 10 sends text data to the character input assist device 200 in response to a request from the user terminal 300 (S01). The transmitted text data as referred to herein are text data D10 assigned with an identifier that are shown in FIG. 1. FIG. 5 is a display example of a text entry field D10a included in the text data D 10 assigned with an identifier. The text data D10 relate to a service of displaying in the display column 10b the enterprise name that is in the category of the type of business when a type of business is input to the text entry field D10a. FIG. 6 is an example of description with HTML of the text entry field shown in FIG. 5 in the text data D10 assigned with an identifier. In the description example shown in FIG. 6, the contents provider describes an id = "business_type" identifier as class information in a portion surrounded by a <form> tag indicating the text entry field. This identifier makes it possible to determine that the input item of the text entry field is a type of business.

In the character input assist device 200, the text data sent from the Web server are processed in the manner as follows. First, the class acquisition unit 21 receives the text data sent from the Web server 10 and acquires class information indicating the text entry field (S02, class acquisition step). When text data D10 assigned with an identifier that are shown in the description example in FIG. 6 are received, the id = "business_type" identifier is acquired as class information. The class information acquired in this step is sent to the reference unit 22.

Then, the reference unit 22 refers to the storage unit 40 based on the class information acquired by the class acquisition unit 21 and acquires dictionary information (for example, URI indicating the location where the dictionary is saved) corresponding to the class information (S03, reference step). The dictionary information acquired in this step is sent to the output unit 23.

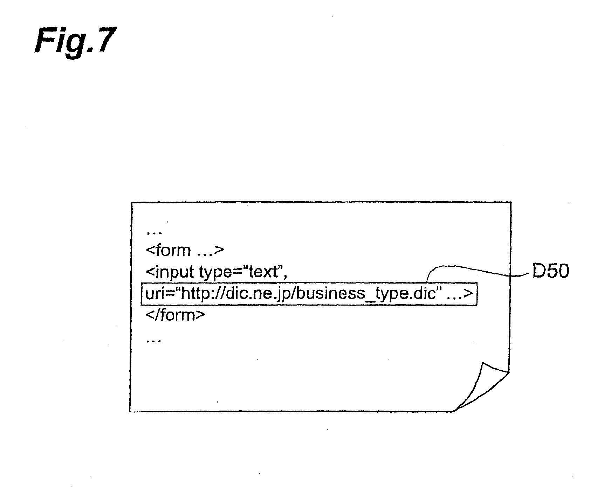

In the output unit 23, the text data and also the dictionary information acquired by the reference unit 22 are sent to the user terminal 300 (S04, output step). More specifically, in the output unit 23 shown in FIG. 1, the dictionary information acquired by the reference unit 22 is embedded in the text data in association with the text entry field, and the text data D20 having the dictionary information embedded therein is sent to the user terminal 300. FIG. 7 shows such an embedding example. The id = "business_type" in the description example shown in FIG. 6 is rewritten in the URI of the dictionary information.

In the user terminal 300, the dictionary information and text data received from the character input assist device 200 are processed in the manner as follows.

In the browser 31 of the user terminal 300, the dictionary information and text data output by the output unit 23 are received and presented to the user (S05, text acquisition step). In the first embodiment shown in FIG. 1, the text data D20 having the dictionary information embedded therein are received and displayed by the browser 31. A display example of the text entry field from among the text data D20 having the dictionary information embedded therein is shown in FIG. 5. The browser 31 extracts the dictionary information D50 (shown as URI in FIG. 7) from the text data D20 having the dictionary information embedded therein and sends this information to the dictionary search unit 32.

When the user inputs and converts the characters in the user terminal 300, the dictionary search unit 32 searches the dictionary 50 specified by the dictionary information D50 sent from the browser 31 and acquires the conversion candidates for the input characters (S06, dictionary search step). More specifically, conversion candidates associated with the characters input in the text entry field D10a are acquired from the dictionary 50. In this case, the dictionary search unit may perform the estimated conversion in which the finally input characters are estimated and converter, instead of directly converting the input characters. The conversion candidates acquired by the dictionary search unit 32 are sent to the display unit 33.

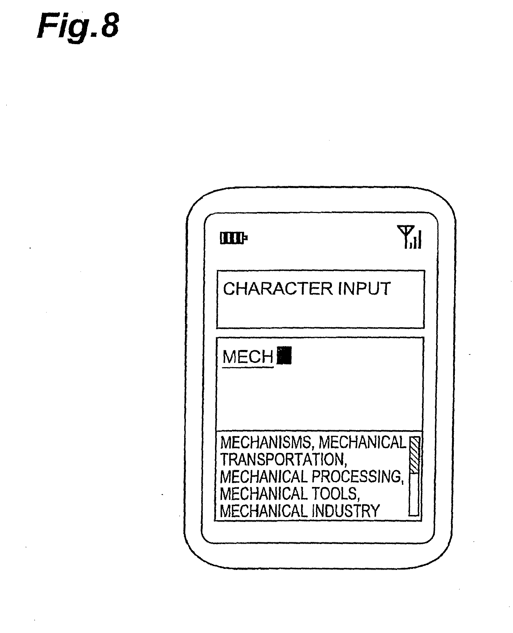

The display unit 33 displays the conversion candidates acquired by the dictionary search unit 32 (S07). FIG. 8 is a display example of conversion candidates. The conversion candidates displayed by the display unit 33 are shown in the lower half of the screen in FIG. 8. In the present example, when the user inputs "mech", a total of five conversion candidates "mechanisms", "mechanical transportation", "mechanical processing", "mechanical tools", and "mechanical industry" are displayed. Then, the user selects any of the displayed conversion candidates and performs character conversion.

The character input assist processing in the character input assist system 1 is thus completed.

As described hereinabove, with the first embodiment, in the text data (Web page) provided from the Web server, the conversion candidates using information of a specific dictionary corresponding to the text entry field can be presented without embedding in the text data the information of a specific dictionary used for converting the characters input in the text entry field of the text data. As a result, a character input assist method can be easily introduced without significant increase in the amount of work or cost for the contents provider that provides the text data. Further, by introducing this inexpensive character input assist method, the contents provider increases convenience for the user when the characters are input in the text entry field.

Thus, in the present embodiment, the party providing class information to the text entry field (contents provider), the party providing the dictionary 50, and the party managing the correspondence of the identification information and dictionary 50 (administrator of the character input assist device 200) can be separate parties. As a result, the cost of providing a structure using the dictionary corresponding to the text entry field can be distributed. Moreover, even when some of the dictionaries become unusable, it is possible to change the dictionary 50 to be used for conversion, without changing the text data, by changing the correspondence between the identification information and dictionary 50. As a result, the system relating to conversion using the dictionary corresponding to the text entry field can be made a robust system and the cost associated with the introduction of conversion function using the dictionary corresponding to the text entry field can be reduced.

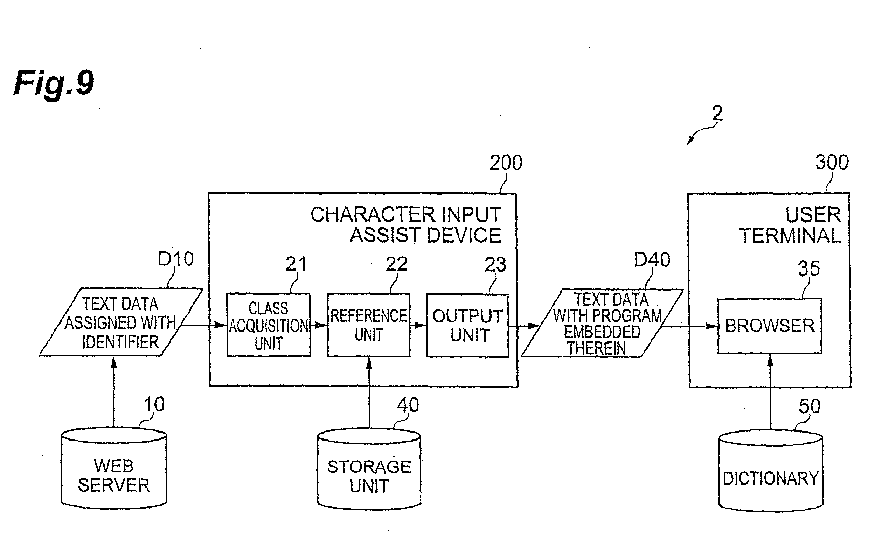

The second embodiment of the present invention will be described below. FIG. 9 illustrates the constitution of the second embodiment. In FIG. 9, the explanation of devices and elements having functions identical to those illustrated by FIG. 1 will be omitted.

The difference between this embodiment and the first embodiment is that in a character input assist system 2 of the second embodiment, the output processing (S04 in FIG. 4, output step) of the dictionary information in an output unit 23 of the character input assist device 200 is based on embedding a program that searches a dictionary specified by the dictionary information in the text data. In addition, the browser 35 in the user terminal 300 has a function of executing the aforementioned program. The processing executed by the character input assist system 2 shown in FIG. 9 will be described below in greater details with reference to the sequence diagram shown in FIG. 4.

Similarly to the first embodiment, text data D10 including a text entry field that are shown in FIG. 5 and FIG. 6 are sent from a Web server 10 (S01). In the character input assist device 200, a class acquisition unit 21 acquires id = "business_type" shown in FIG. 6 as class information from the text data D10 having an identifier assigned thereto and the class acquisition unit send the acquired class information to a reference unit 22 (S02, class acquisition step). The reference unit 22 refers to the storage unit 40, acquires dictionary information, for example URI, to be used for converting the characters input in the text entry field, and sends the acquired dictionary information to an output unit 23 (S03, reference step).

In the second embodiment, the output unit 23 embeds, for example as JavaScript, in the text data a program that accesses the dictionary indicated by the dictionary information such as URI acquired by the reference unit 22 and searches for conversion candidates. Then, the output unit outputs the text data D40 embedded with the program (S04, output step).

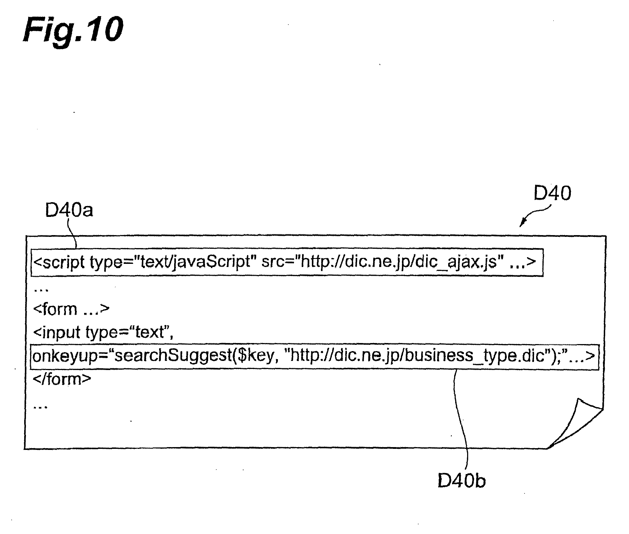

FIG. 10 is a description example of the text data D40 embedded with the program. The program shown in the description example of FIG. 10 is JavaScript typically called Ajax that, when characters are input in the text entry field, refers to the dictionary 50 positioned in the location asynchronously indicated by the URI based on the input characters and displays the conversion candidates. A description that reads a library that defines the functional operation used in this function is added to the text data D40 embedded with the program (in FIG. 10, the line D40a of the text data D40 embedded with the program corresponds to this description). Further, as shown in the line D40b in FIG. 10, the text data D40 embedded with the program is described as onkeyup = "searchSuggest($key,"http://dic.ne.jp/business_type.dic");", and when an input key is separated (onkeyup), the program searches the dictionary of the URI by the input word ($key) of the text, acquires the partially matched words from the dictionary 50, and indicates the display thereof as conversion candidates. Thus, a function (defined within the library) that is called out correspondingly to the user operation can be also embedded correspondingly to the text entry field (text format description).

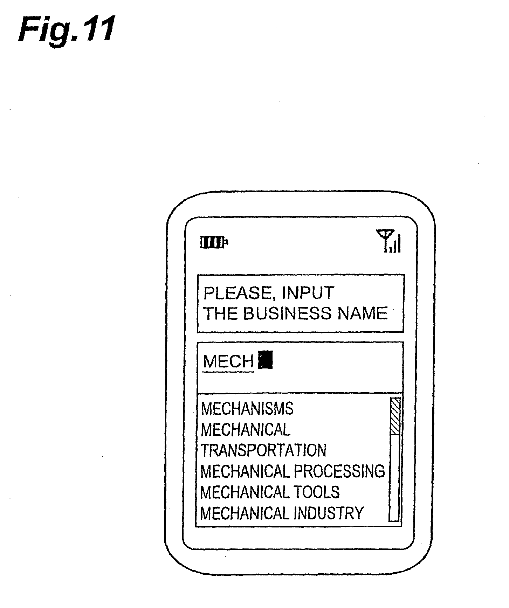

The text data D40 embedded with the program are received by the browser 35 of the user terminal 300 (S05, text acquisition step). In the browser 35, where a character is input in the text entry field, the program embedded in the text data D40 embedded with the program is read and executed, whereby the dictionary 50 is searched, the conversion candidates are acquired (S06, dictionary search step), and conversion candidates for the characters input in the text entry field are displayed (S07). FIG. 11. illustrates an example in which the text data D40 embedded with the program shown in FIG. 10 are displayed by the browser 35. Where the program shown in FIG. 10 is executed, the conversion candidates are displayed to match the character input by the user as shown in FIG. 11, without switching the screen during character input. Any of the displayed conversion candidates is selected by the user and character conversion is performed.

The character input assist processing in the character input assist system 2 is thus completed.

In the second embodiment, the program embedded in the text data D40 embedded with the program is executed by the browser 35. Therefore, the search of a specific dictionary in the dictionary search unit 32 in the first embodiment (S06, dictionary search step) and the display of conversion candidates in the display unit 33 (S07) are also performed by the browser 35.

With the above-described second embodiment, the access to the dictionary is performed in the program embedded in the text data. Therefore, it is not necessary that the user terminal 300 have a function of accessing the dictionary. Therefore, the conversion of characters using the dictionary corresponding to the text entry field can be implemented in an easy manner. Further, as shown in FIG. 11, because conversion candidates are displayed to match the input by the user, without switching the screens during character input, a character input assist method that is highly convenient for the user can be provided.

The program that is embedded in the text data in association with the text entry field and serves to access a specific dictionary and search conversion candidates in the second embodiment is not limited to the program shown in FIG. 11, and the contents thereof can be changed in a variety of way.

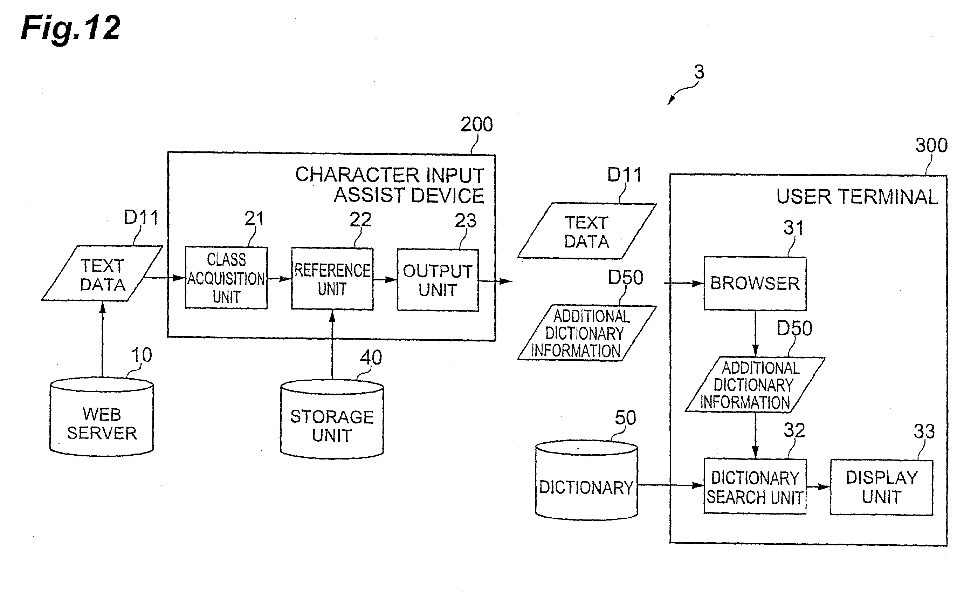

The third embodiment of the present invention will be described below. FIG. 12 illustrates the constitution of the third embodiment. In FIG. 12, the explanation of devices and elements having functions identical to those illustrated by FIG. 1 will be omitted.

The character input assist system 3 of the third embodiment shown in FIG. 12 differs from the systems of other embodiments in that text data D11 provided from a Web server 10 are not provided in advance with an identifier showing the class of text entry field and in that the dictionary information and text data output from an output unit 23 of the character input assist device 200 are composed of the text data D11 and additional dictionary information D50 containing dictionary information. The processing executed by the character input assist system 3 shown in FIG. 12 will be described below in greater detail by using the sequence diagram shown in FIG. 4.

The text data D11 including a text entry field are sent to the character input assist device 200 from the Web server 10 (S01). In a class acquisition unit 21 of the character input assist device 200, the text data D11 are received and information indicating the saving location of text data D11 (for example, URI) is acquired as class information indicating the class of the text entry field of the text data D11 and sent to a reference unit 22 (S02, class acquisition step). The reference unit 22 refers to a storage unit 40 based on the class information, acquires dictionary information corresponding to the class information of the text entry field and sends the acquired dictionary information to an output unit 23 (S03, reference step). In the output unit 23, the text data D11 together with additional dictionary information D50 including dictionary information acquired by the reference unit 22 are output as a file different from the text data D11 (as metadata separated from the text data D11) and sent to a user terminal 300 (S04, output step).

In the present embodiment, in the storage unit 40, the information (URI or the like) indicating the saving location of text data is saved as class information, and the information (URI or the like) specifying the dictionary to be used in the text entry field in the text data is stored as dictionary information. A data file having recorded therein information that specifies the dictionary to be used in the text entry field in the respective text data may be stored as the dictionary information of the storage unit 40. In this case, in the storage unit 40, the corresponding data file is selected with respect to the class information sent from the reference unit 22 and the selected data file is sent to the reference unit 22. The reference unit 22 sends the data file sent from the storage unit 40 to the output unit 23, and the output unit 23 outputs this data file as the additional dictionary information D50.

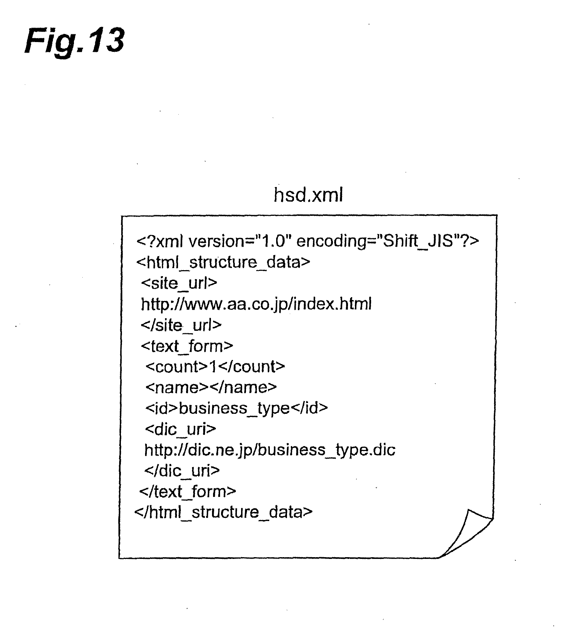

FIG. 13 illustrates an example (file name: hsd.xml) of data in which the additional dictionary information D50 that is also sent when the text data D11 containing the text entry field shown in FIG. 5 are sent from the output unit 32 to the user terminal 300 is described in XML (extensible Markup Language).

In the example shown in FIG. 13, data are described as <count> 1 </count> and indicated as information relating to the first text entry field in the text data. With respect to the dictionary information, the description <dic_uri> ... is used, and an URI of the saving location of the dictionary is designated. Therefore, a specific dictionary can be searched based on this information. Further, in the text data described in HTML, name of the text entry field (form name) is sometimes designated as <name = ...>. In this case, a text entry field in the text data to which the information relates can be also indicated by using a <name> tag. In the description example shown in FIG. 13, the text entry field name is absent. Therefore, information is not recorded in the <name> tag.

The text data D11 and additional dictionary information D50 can be associated by designating the additional dictionary information D50 in a header portion of the text data D 11. As for the designation method in the header portion, for example, the file name of the additional dictionary information D50 can be directly designated as <meta html_structuredata = "hsd.xml">, or it can be embedded in a style sheet such as a CSS (Cascading Style Sheets) file.

In the browser 31 of the user terminal 300, the text data D11 and additional dictionary information D50 are received and the contents described by the text data D11 is displayed (S05, text acquisition step). Further, in the browser 31, the additional dictionary information D50 is sent to the dictionary search unit 32. When the user inputs the characters into the text entry field contained in the text data and converts the characters, the dictionary search unit 32 refers to additional dictionary information D50, searches the dictionary 50 specified by the additional dictionary information D50, acquires the conversion candidates, and sends them to the display unit 33 (S06, dictionary search step). The display unit 33 displays the conversion candidates acquired by the dictionary search unit 32 (S07). Then, any one of the displayed conversion candidates is selected by the user and character conversion is performed.

The character input assist processing in the character input assist system 3 is thus completed.

With the above-described third embodiment, conversion candidates can be indicated by using information of a specific dictionary in the user terminal 300 even when an identifier indicating the class of text entry field has not been embedded in advance in the text data (Web page) D1 1 provided from the Web server 10. Therefore, a character input assist method that is convenient for the user can be provided in an easy manner.

Further, when the dictionary information is output as data (additional dictionary information D50) that are different from the text data D11, as in the third embodiment, the additional dictionary information D50 is independent from the text data D11 and, therefore, can be easily edited. Further, a processing of a wider scope can be performed. For example, the additional dictionary information D50 can be encrypted to prevent it from public disclosure.

When a data file having recorded therein the information specifying a dictionary is provided in advance by the storage unit 40 and these data are provided as the additional dictionary information D50 in the third embodiment, the character input method in accordance with the present invention can be employed with an even higher level of flexibility. For example, a third party other than the contents provider that creates the text data, for example, an administrator of the character input assist device 200 or an administrator of the storage unit 40, can produce the data file having recorded therein the information specifying a dictionary and associate this data file with already existing text data. Therefore, the contents provider that has created the already existing text data does not perform new operations and a data input environment that is highly convenient for the user can be created.

Further, the character input assist method in accordance with the present invention can be also provided by communications between the user terminal 300 and the character input assist device 200, as in the case where the user selects the input contents in the browser 31 of the user terminal 300 and sends the selected contents to the character input assist device 200, and the character input assist device 200 that has received the selected contents selects an adequate data file and sends it to the user terminal 300.

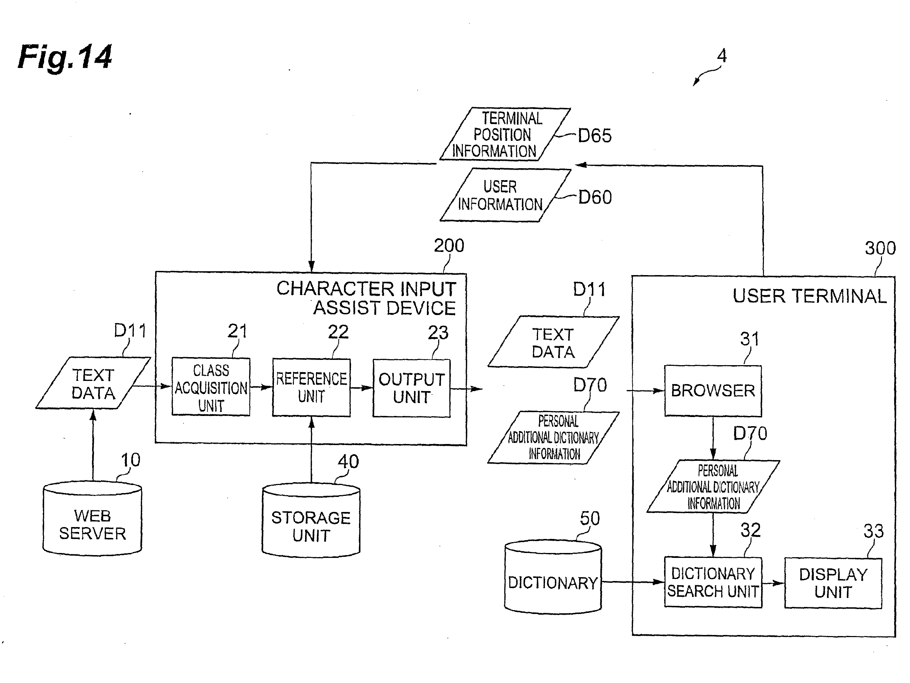

The fourth embodiment of the present invention will be described below. FIG. 14 illustrates the constitution of the fourth embodiment. In FIG. 14, the explanation of devices and elements having functions identical to those illustrated by FIG. 1 will be omitted.

A character input assist system 4 of the fourth embodiment shown in FIG. 14 is identical to the character input assist system of the third embodiment in the following two aspects. Firstly, text data D11 provided from a Web server 10 are not provided in advance with an identifier indicating the class of text entry field. Secondly, the text data and dictionary information output from an output unit 23 of the character input assist device 200 are output as data difference from the text data D11. On the other hand, the character input assist system 4 of the fourth embodiment differs from the character input assist systems of other embodiments in the following two aspects. Firstly, when a user terminal 300 sends a text data output request, user information D60 that indicates the attribute of the user handling the user terminal 300 and position information D65 of the user terminal 300 are sent from the user terminal 300 to the character input assist device 200. Secondly, personal additional dictionary information D70 that is output together with the text data D11 output from the output unit of the character input assist device 200 is information that is individually produced (personalized) for each user of the user terminal 300.

In the character input assist system 4 having the above-described specific features, users that handle text data by using the user terminal 300 are classified into a plurality of categories based on the user information D60 and position information D65 of the user terminal 300, and information specifying a dictionary that differs for each category of users is provided as personal additional dictionary information D70 with respect to a text entry field of the text data. Furthermore, words contained in the dictionary 50 are also classified in advance into a plurality of genres. The aforementioned personal additional dictionary information D70 includes information in which the order (priority rank) of outputting the conversion candidates for each category of users is designated by designating the genre, this included information serving as the information specifying the output order. Therefore, the specific feature of this embodiment is that when characters input into a text entry field are converted by using a dictionary specified by the personal additional dictionary information D70, the conversion candidates are output in the order that differs depending on the category of the user based on the information specifying the output order.

Components of the character input assist system 4 that have constitution different from that of the character input assist devices of other embodiments will be described below in greater detail.

The user information D60 sent from the user terminal 300 to the character input assist device 200 in the character input assist system 4 of the present embodiment is the information indicating the attribute of the user of the user terminal 300. Examples of the user information D60 include the gender and age of the user. This information can be acquired from the information that has been saved in the user terminal by the user himself by writing in a memory unit such as telephone register of the user terminal. Further, information relating to the contract between the user and internet provider also can be used as the user information D60. For example, in some cases, the character input assist device 200 is a proxy provided by the internet provider and stores the user contract information. When the user contract information stored by the character input assist device 200 is used as the information indicating the attribute of the user, the telephone number of user ID of the user terminal 300 is sent as information specifying the user together with the output request of the text data from the user terminal 300, the sent information serving as the user information D60. In the character input assist device 200, information indicating the attribute of the user can be acquired by extracting user contract information corresponding to the user ID sent from the user terminal 300.

For example, when the user terminal 300 having a GPS function is installed, the present position information of the user terminal 300 acquired by the GPS function can be used as the position information D65 of the user terminal 300 that is sent from the user terminal 300 to the character input assist device 200. Further, for example, access point information such as access point in a wireless LAN or base station information in a cellular phone may be also sent as the position information D65 of the user terminal 300.

In the character input assist system 4 of the present embodiment, a data file is stored in the storage unit 40 that has recorded therein the information (URI or the like) indicating the saving location of text data as the class information and the information specifying the dictionary used in the text entry field in respective text data, those two kinds of information being associated with each other. This data file is created in advance by the contents provider correspondingly to the text data D10 and stored in the storage unit 40. However, the data file may be also created by a third party other than the contents provider.

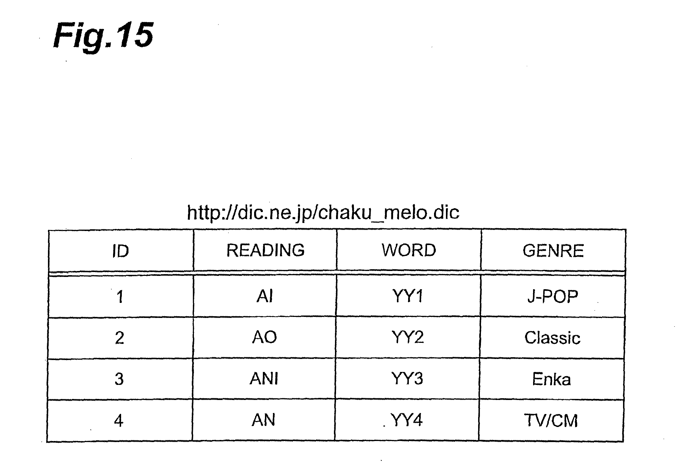

As described above, dictionaries 50 that differ depending on the category of the user are sometimes employed. Therefore, the dictionary 50 of the character input assist system 4 is prepared according to the category. Respective genres are associated in advance with the words contained in the dictionary 50. FIG. 15 shows an example of dictionary 50 (saving location: ''http://dic.ne.jp/chaku_melo.dic'') of the character input assist system 4. As shown in FIG. 15, reading, a word, and a genre of the word are associated in advance in the dictionary 50. For example, the word YY1 that has an ID "1" and reads "ai" has a genre "J-POP". A genre is thus associated with each word. Which genre is used in the dictionary 50 is disclosed in advance to a contents provider or third party, and the contents provider or third party can determine the sequence (priority order) output as the dictionary information and conversion candidate and store these types of information in the storage unit 40 with consideration for the genre used in the dictionary 50.

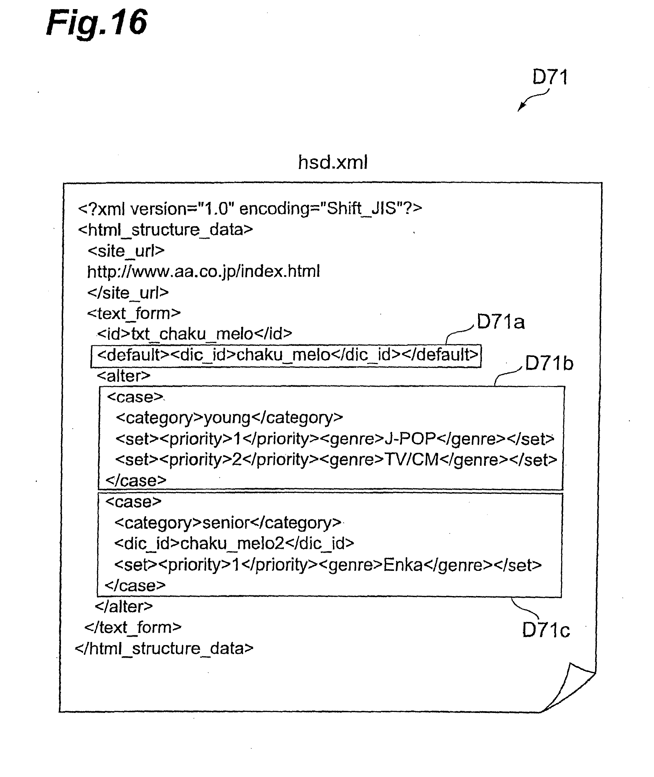

FIG. 16 shows an example a data file D71 that is stored in the storage unit 40 and sent to the reference unit 22 correspondingly to the class information sent from the reference unit 22. This data file D71 (file name: hsd.xml) is described in XML. As shown in FIG. 16, information indicating the saving location of the text data D10 (URL: Uniform Resource Locator) is indicated in the tag <site_url> and indicates that this data file D71 is produced correspondingly to the text data D10.

In the present embodiment, a plurality of categories (for example, "young" and "senior") corresponding to the user's age, which are the information indicating the attribute of the user are established in advance, and the category to which the user belongs is determined according to the user's age that is sent from the user terminal 300. Further, in the data file D71 shown in FIG. 16, there are recorded information (class information) indicating the class of the text field associated with the information (dictionary information) specifying the dictionary that is used for converting the character input into the text entry field for each user category and also information (information specifying the output sequence) for changing the priority order of the output of conversion candidates in the dictionary. More specifically, with respect to the text entry field specified by "txt_chaku_mclo" recorded in the <id> tag, the class information of the text field (<dic_id>) is taken as "chaku_melo" as an initial setting (<default>), as recorded in the D71 a line, and the use of the dictionary specified by the dictionary information corresponding to this class information is designated (thus, the aforementioned <id> tag is equivalent, for example, to the <name> tag in FIG. 13, and the <dic_id>tag is equivalent to the <id> tag in FIG. 13): Further, in the D71b line, with respect to a user for which the category (<category>) is "young", the dictionary indicates the display of conversion candidates for the character input in the text field such that the genre (<genre>) of "J-POP" is set with a priority order 1 (<priority>1</priority>) and the genre "TV/CM" is set with a priority order 2 {<priority>2</priority>). Further, in the D71c line, with respect to a user for which the category is "senior", the description is such that the class information corresponding to the text entry field is set to "chaku_melo2". Further, when the dictionary specified by the above-described class information is used, the description indicates the display of the "Enka" genre with the priority order 1.

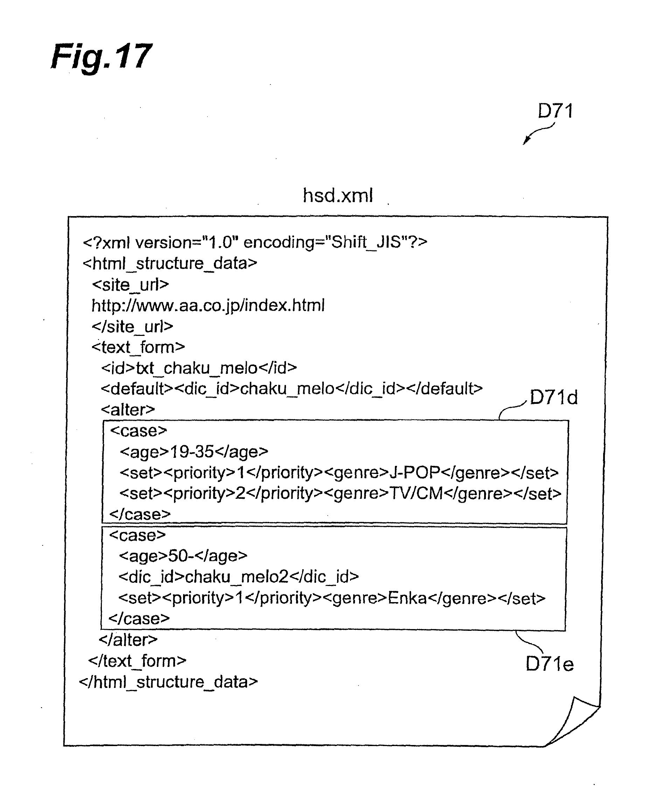

The data file D71 shown in FIG. 17 illustrates a different example of change designation for a priority order corresponding to the user's age. In the data file D71 shown in FIG. 17, the priority order (corresponding to the user's age) of the dictionary used for converting characters input in the text entry field is indicated in the D71d line and D71e line in the same manner as in the D71b line and D71c line in FIG. 16. However, in the D71b and D71c lines in FIG. 16, the user's age, which is the information indicating the attribute of the user, is displayed as a "category", whereas in the D71 d and D71e lines in FIG. 17, the age range of the user is directly designated using the <age> tag. Thus, when the data file that directly designates the age is stored in the storage unit 40, a processing of embedding the dictionary information corresponding to the user's age can be performed with reference to the user's age contained in the user information D60 sent from the user terminal 300.

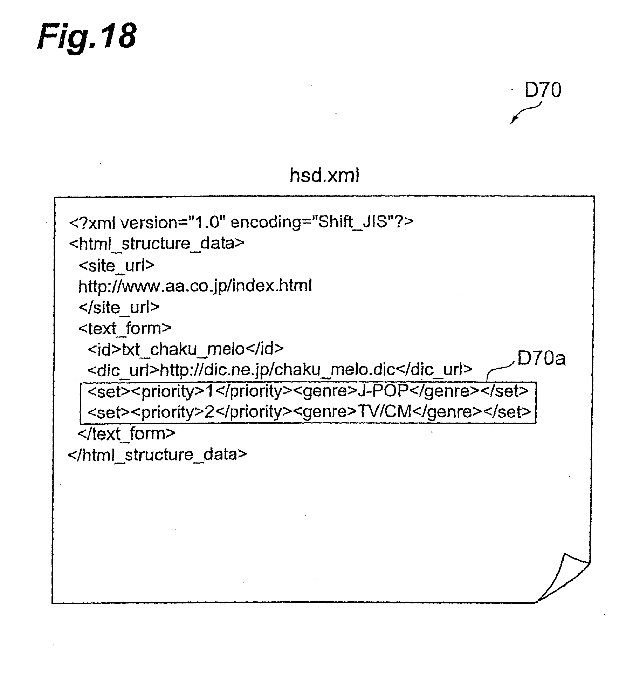

FIG. 18 shows an example of personal additional dictionary information D70 sent from the character input assist device 200 to the user terminal 300 (file name: hsd.xml). The personal additional dictionary information D70 shown in FIG. 18 is created with respect to a "young" user. Because the personal additional dictionary information D70 shown in FIG. 18 designates the URL (<dic_url>) of the saving location of the dictionary 50, which is the dictionary information corresponding to the class information (<dic_id>) of the text entry field, the specific dictionary 50 can be searched based on this information. Further, information (output sequence information) that specifies the output sequence indicating the priority order of genres when displaying the conversion candidates input in the text field is recorded in the D70a line in the same manner as in the D71a line of the data file D71. The contents herein is identical to the contents recorded in the D71b line in FIG. 16, and the record with the genre "J-POP" has a priority order 1, whereas the record with the genre "TV/CM" has a priority order 2.

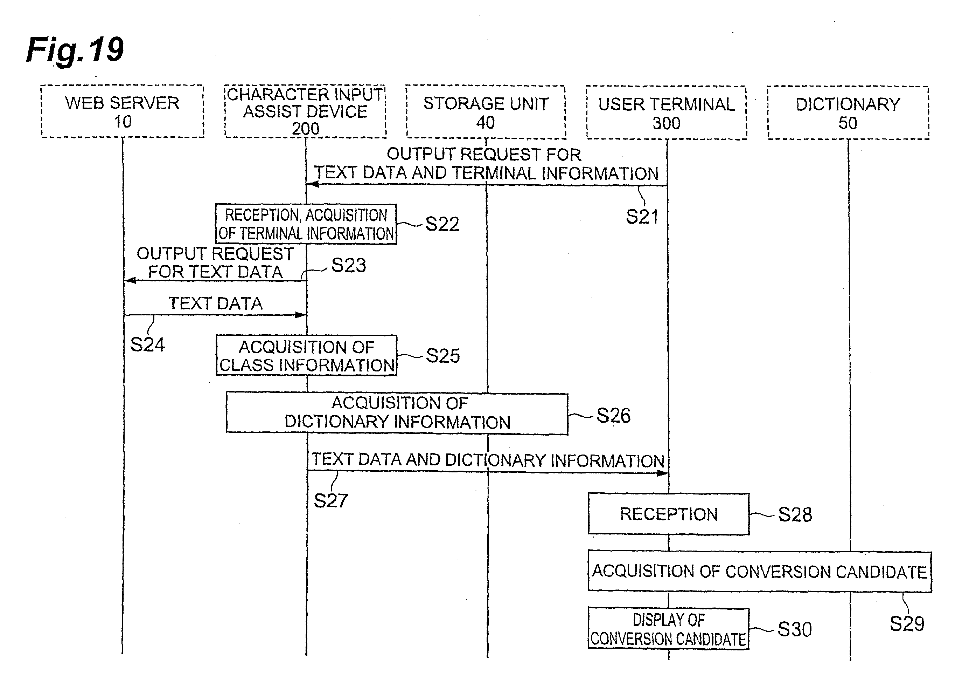

The processing executed by the character input assist system 4 having the above-described constitution is described below in greater details with reference to the sequence diagram shown in FIG. 19. In the explanation below, a case will be described in which the display sequence of the conversion candidates for the characters input in the text entry field is changed correspondingly to the user's age by using the age of the user handling the user terminal 300 as the user attribute contained in the user information D60, from among the user information D60 and position information D65 of the user terminal 300.

An output request for text data is sent from the user terminal 300 to the character input assist device 200 (S21). More specifically, the output request for text data that is sent herein is an HTTP request. At this time, the user information D60 that describes the user attribute as described hereinabove, and the position information D65 of the user terminal 300 are also sent as the information relating to the user terminal 300 together with the output request for text data to the character input assist device 200 as the terminal information. In the present embodiment, the terminal information is assumed to be sent simultaneously with the output request for text data, but the terminal information may be also set at a different timing.

The output request for text data and terminal information sent from the user terminal 300 are received by the character input assist device 200 (S22, output request reception step). In the character input assist device 200, terminal information is acquired and saved from among the output request for text data and terminal information (user information D60 and position information D65) sent from the user terminal 300. The output request for text data is then sent to the Web server 10 (S23).

In the Web server 10, text data D11 containing a text entry field are created correspondingly to the text data output request sent from the character input assist device 200, and created text data are sent to the character input assist device 200 (S24). The class acquisition unit 21 of the character input assist device 200 receives the text data D11, acquires the information (for example, URI) indicating the saving location of the text data D11 as the class information indicating the class of the text entry field of the text data D11, and sends the acquired class information to the reference unit 22 (S25, class acquisition step). The reference step 22 acquires the dictionary information corresponding to the class information of the text entry field and, if necessary, the information indicating the saving location of the dictionary specified by the dictionary information based on the class information with reference to the storage unit 40, and sends the acquired information to the output unit 23 (S26, reference step).

Here, the reference unit 22 acquires from the storage unit 40 the data file D71, such as shown in FIG. 16, in which the dictionary information associated with the class information and the output sequence (priority order) in the case the dictionary search is performed using the dictionary are recorded correspondingly to a plurality of categories of the users. Processing into the dictionary information that is preferred for the user handling the user terminal 300 is then performed based on the user information D60 and position information D65 sent from the user terminal 300.

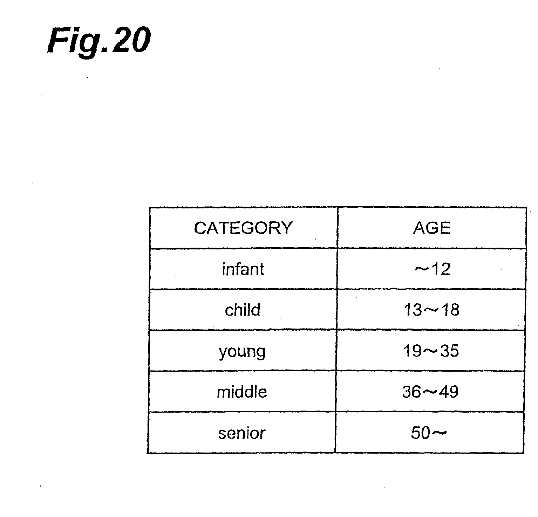

FIG. 20 shows a table in which the user's age is associated with categories. For example, when the user's age is 19 to 35, the user belongs to a "young" category. In the character input assist device 200, the table such as shown in FIG. 20 is saved in advance in the reference unit 22, and when the user's age is acquired as the information indicating the user attribute, the category into which the user is to be included is determined. In the case where a data file D71 in which the age is directly indicated, as shown in FIG. 17, is stored in the storage unit 40, when the information is sent from the storage unit 40 to the reference unit 22, the dictionary information and output sequence information that are optimum for the user can be acquired without referring to the correspondence table such as shown in FIG. 20 in the reference unit 22. Then, data (data file 71) in which the dictionary information and output sequence information sent from the storage unit 40 are indicated are referred to based on the class information and a personal additional dictionary information D70 shown in FIG. 18 is produced as sent to the output unit 23, this personal additional dictionary information having embedded therein only the dictionary information and output sequence information corresponding to the user's age based on the dictionary information. When the age of the user handling the user terminal 300 has not been acquired in advance in the character input assist device 200, the personal additional dictionary information D70 is created based on the initially set dictionary information that has been recorded in advance in the data file D71 (in the case of the data file D71 shown in FIG. 17, it is a dictionary for which the <dic_id> is "chaku_melo").

In the output unit 23, the text data D11 and the personal additional dictionary information D70 processed in the above-described manner correspondingly to the user in the reference unit 22 are sent to the user terminal 300 (S27, output step).

In the browser 3 1 of the user terminal 3 00, the text data D11 and personal additional dictionary information D70 are received and the contents described in the text data D11 are displayed (S28, text acquisition step). Further, in the browser 31, the personal additional dictionary information D70 is sent to the dictionary search unit 32. When the user inputs the characters into the text entry field contained in the text data and converts the characters, the dictionary search unit 32 refers to the personal additional dictionary information D70, searches the dictionary 50 specified by the personal additional dictionary information D70, outputs the conversion candidates, and sends the conversion candidates to the display unit 33 (S29, dictionary search step). The display unit 33 displays the conversion candidates acquired by the dictionary search unit 32 (S30).

Here, the case will be explained in which the dictionary 50 is searched based on the personal additional dictionary information D70 shown in FIG. 18 and the conversion candidates are displayed. For example, when the user inputs "a" in the text entry field, the four words shown in FIG. 15 as words that start with "a" are displayed as conversion candidates. However, because the priority order 1 is designated as "J-POP" and the priority order 2 is designated as "TV/CM" in the D70a line of the personal additional dictionary information D70, the conversion candidates are displayed in the display unit 33 according to the priority order. Thus, the display sequence of the conversion candidates in the display unit 33 is as follows: YY1 (genre: J-POP), YY4 (genre: TV/CM), YY2 (genre: Classic), YY3 (genre: Enka).

Any one from among the conversion candidates displayed by the display unit 33 is then selected and character conversion is performed. The character input assist processing in the character input assist system 4 is thus completed.

Thus, with the above-described fourth embodiment, the user information D60 or terminal position information D65 is sent in advance from the user terminal 300 to the character input assist device 200 and these two kinds of information are saved in the character input assist device 200. Therefore, when the dictionary information is associated with the text entry field of the text data D111 in the reference unit 22, it is possible to select more adequate dictionary information according to the characteristics of the user terminal 300 or the user handling the user terminal 300 by referring to the user information D60 or terminal position information D65. Therefore, a character input environment that is more convenient for the user can be provided.

Further, in the above-described embodiment, information specifying the output sequence in the case conversion is performed using a dictionary (in the present embodiment, this information is included in the personal additional dictionary information D70) is sent from the character input assist device 200, and when the character input in the text entry field in the user terminal 300 is converted, the conversion candidates are output according to the output sequence based on this information. Therefore, for example, because a word that is used more frequently can be displayed at the top of the conversion candidate list, a character input environment that is more convenient for the user can be provided.

Further, in the present embodiment, a processing is explained in which a plurality of categories corresponding to the user's age, which is the information indicating the attribute of the user, are established in advance, a category to which the user belongs is determined correspondingly to the user's age sent from the user terminal 300, and the personal additional dictionary information D70 is created correspondingly to the determination results. However, establishing the categories in advance in the character input assist device 200 is not a mandatory step, and the processing may be performed in which the personal additional dictionary information D70 is directly created based on the user information D60 sent from the user terminal 300 and the terminal position information D65. Further, even in the case of processing in which dictionary information and also information (priority order) specifying the output sequence at the time the conversion of characters is performed by using the dictionary information are output without acquiring the user information D60 or terminal position information D65 from the user terminal 300, for example, the conversion candidate that is generally frequently used can be selected first and output. Therefore, character assist environment that is convenient for the user can be provided.

Further, in the constitution shown in FIG. 14, the user information D60 and terminal position information D65 are sent from the user terminal 300 to the character input assist device 200, but information of only one kind may be also sent.

In the explanation relating to the character input assist processing that uses FIG. 19, the case of using the user's age as the user information D60 is explained, but a highly convenient character input assist method can be also provided in the case where the priority order is designated based on the terminal position information D65. More specifically, for example, in the case of a Web page (text data) for providing services relating to routes and schedules of trains, the description in personal additional dictionary information D70 is such that the neighboring station is displayed first based on the GPS information of the user terminal 300 provided as the user position information D65 in the reference unit 22 with respect to the text entry field. On the other hand, in the dictionary 50, the GPS information of the station is recorded as a genre, and in the display step, it is displayed in the display unit 33 of the user terminal 300 in the order from the neighboring station that is frequently used by the user, whereby a more convenient character input environment is provided.

The user category used in determining the dictionary information may be created based not only on the information indicating the user attribute such as gender, but also on the Web access history, user travel history, operation history of the user terminal 300, or the like. Thus, when a history relating to the user terminal, such as access history, travel history, or operation history is used to determine the user category, it is possible to use a method by which the history relating to a fixed period is collected in advance in the user terminal 300 and then converted into a data format that is easy to use for determining the category and sent, or a method by which the history is sent continuously from the user terminal 300 to the character input assist device 200, these kinds of information are accumulated in the character input assist device 200, and the accumulated information is processed as necessary. Further, the history of text data (Web page) that has been acquired by the user terminal 300 by accessing the Web server 10 via the character input assist device 200 can be also accumulated in the character input assist device 200 and considered as access history of the user terminal 300 to the Web.

Here, a processing method relating to the case in which the Web access history is used as the user information D60 indicating the user attribute and the personal additional dictionary information D70 relating to the user is created will be described as a modification example of the fourth embodiment.

The character input assist device 200 refers to the history (access history) of text data (Web page) acquired by the user terminal 300 by accessing the Web server 10 via the character input assist device 200 and examines the genre (for example, J-POP, Classic, etc.) of text data that were often acquired by the user, thereby determining the attribute genre of the user. More specifically, a genre is determined and classified for each text data acquired by the user terminal 300 by using a method by which a table is saved in advance in which the saving location of text data is associated with the genre of text data, or a method by which a genre is determined from a class of words contained in the text data. Then, the user attribute genre is determined by a method in which one or a plurality of genres that are frequently acquired by the user of the user terminal 300 (large number of accesses) are taken as user attribute genres, or a method by which a characteristic vector generated from the genre of text data acquired by the user is employed, clustering of genres is performed using a K-means method, one or a plurality of genres that are frequently acquired by the user of the user terminal 300 (large number of accesses) are taken as user attribute genres, and the genre of the cluster to which the user belongs is taken as the user attribute genre.

Then, the user attribute genre is recorded as a genre that it first to be displayed in the dictionary search step in the personal additional dictionary information D70 and output. As a result, the priority display of the conversion candidate corresponding to the user attribute genre determined based on the past Web access history is recorded in the personal additional dictionary information D70, and when character conversion is performed using the personal additional dictionary information D70, a word classified in this genre is displayed in preference to others.

Where the personal additional dictionary information D70 is generated by performing the above-described processing in the character input assist device 200, the preference order corresponding to individual users can be provided. Therefore, a character input environment that is highly convenient for the user is provided.

In this modification example, where the genre (genre used for classification) that is used for determining the user attribute genre is publicly disclosed in advance to the contents provider, the contents provider can produce the text data D10 by assuming the genre used for classification. Further, because the contents provider can produce the data file D71 and store it in the storage unit 40 by assuming the genre used for classification, it is possible to provide dictionary information that better corresponds to the genre to which the user belongs.

Further, in the above-described modification example, a mode is explained in which the genre to which the user belongs is determined by referring to the history (access history) of text data (Web page) acquired by the user terminal 300 by accessing the Web page 10 via the character input assist device 200, and the output sequence of conversion candidates during character conversion is recorded in the personal additional dictionary information D70 according to the genre and output, but a dictionary used during character conversion can be also determined based on the access history. In this case, because the character conversion using a dictionary corresponding to the preferences of the user based on the access history of the user terminal 300 is performed, a more convenient character input environment can be provided.

The preferred embodiments of the present invention are described above. However, the character input assist method, character input assist system, user terminal, and character conversion method in accordance with the present invention are not limited to the above-described embodiments and can be implemented in a variety of ways.

For example, in the above-described first to forth embodiments, the character input assist system is composed of the Web server, character input assist device, storage unit, user terminal, and dictionary. However, among these components, the character input assist device and storage unit, and the user terminal and dictionary may be disposed within the same apparatus and connected via an internal bus.

Further, the implementation modes of the above-described first to fourth embodiments can be appropriately selected for use from a plurality of modes.

For example, it is possible to generate dictionary information or a program that searches the dictionary, as in the first or second embodiment, with respect to the text data that have not been provided in advance with an identifier, as in the third embodiment, and embed the information or program in the text data. Further, it is also possible to add a data file having recorded therein the information specifying the dictionary, as in the third embodiment, to the text data that have been provided in advance with an identifier, as in the first or second embodiment, and send it to the user terminal. In another possible implementation mode, the information (priority order) specifying the output sequence in the case the conversion of characters is performed as in the fourth embodiment can be embedded for output in the text data, as in the first or second embodiment.

Other examples of implementation are described below. In the text data provided from the Web server in the first or second embodiment, an identifier that indicates the class of text entry field is embedded in advance in association with the text entry field. However, the information indicating the class of text entry field can be also sent as data different from the text data from the Web server, as text data and additional dictionary information that are sent to the user terminal from the character input assist device in the third embodiment. In this case, the association of the text data and data containing the information indicating the class of text entry field can be realized by a method similar to that of the third embodiment, for example, by recording the file name in advance in the header portion of the text data. By dividing the text data and the data containing the information that indicates the class of text entry field in the above-described manner, it is possible to edit or handle data freely, for example, to encrypt and send only the information indicating the class of text entry field.

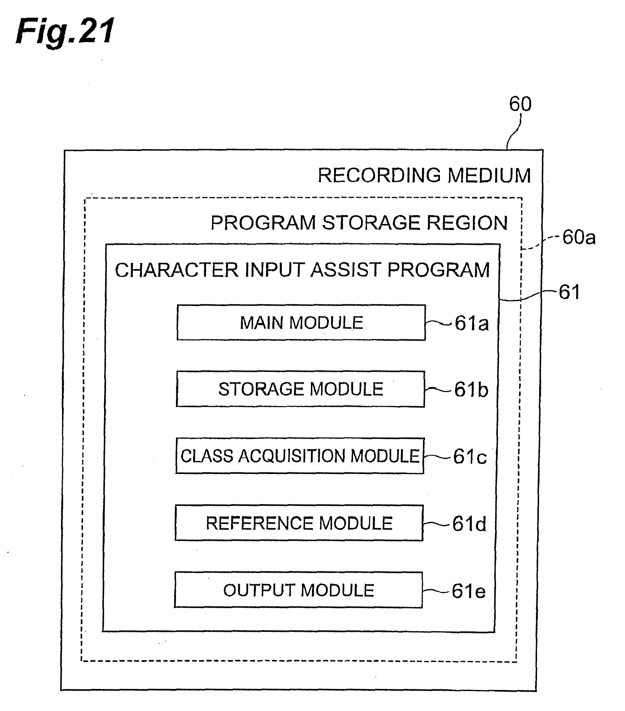

A character input assist program for executing the above-described sequence of character input assist processing operations in a computer configured as the character input assist device 200 such as the above-described proxy device will be explained below. As shown in FIG. 21, the character input assist program 61 is stored in a program storage region 60a formed in a recording medium 60 provided in the computer.

The character input assist program 61 comprises a main module 61a that controls the processing, a storage module 61b, a class acquisition module 61c, a reference module 61 d, and an output module 61e. The functions realized by executing the storage module 61b, class acquisition module 61c, reference module 61d, and output module 61e are identical to the functions of the above-described storage unit 40, class acquisition unit 21, reference unit 22, and output unit 23, respectively.

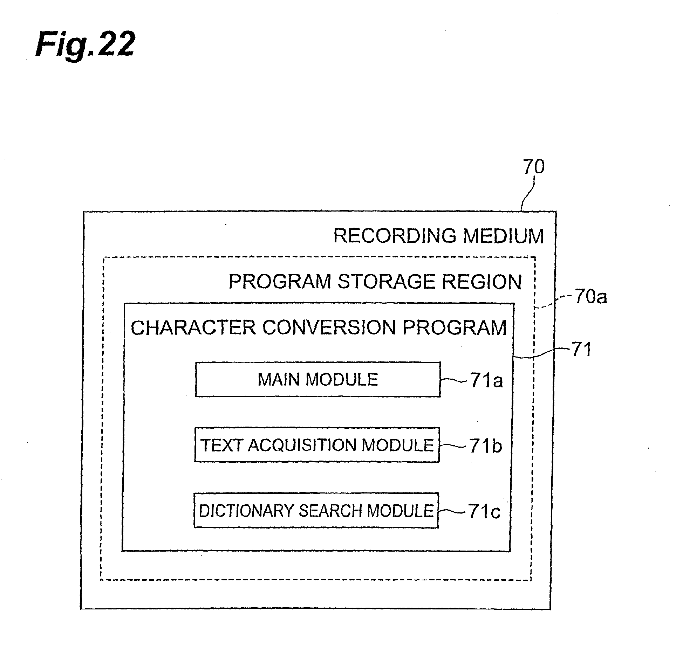

A character input assist program for executing the above-described sequence of character input assist processing operations in a computer configured as the above-described user terminal 300 will be explained below. As shown in FIG. 22, a character conversion program 71 is stored in a program storage region 70a formed in the recording medium 70 provided in a computer.

The character conversion program 71 comprises a main module 71a that controls the processing, a text acquisition module 71b, and a dictionary search module 71 c. The functions realized by executing the text acquisition module 71b and dictionary search module 71c are identical to those of the above-described browser 31 and dictionary search unit 32, respectively.

The entire character input assist program 61 and character conversion program 71 or part thereof may be configured to be transmitted via a transmission medium such as a communication line and received and recorded (installed) by another device.

## Claims

1. A character input assist method based on a character input assist system (200) that assists in dictionary-using conversion of characters input in a text entry field of text data and comprises storage means (40) for storing information indicating a relationship between class information indicating a class of the text entry field and dictionary information specifying a dictionary to be used for converting the characters input in the text entry field, the method comprising:
a class acquisition (21) step of acquiring the class information from the text data;
a reference (23) step of acquiring dictionary information corresponding to the class information with reference to information stored in the storage means based on the class information acquired in the class acquisition step; and
an output (23) step of outputting the dictionary information acquired in the reference step.

2. The character input assist method according to claim 1, wherein in the class acquisition step, an identifier embedded in the text data in association with the text entry field is acquired as the class information.

3. The character input assist method according to claim 1, wherein in the class acquisition step, information indicating a saving location of the text data is acquired as the class information.

4. The character input assist method according to claim 1, wherein in the output step, the dictionary information is embedded in the text data in association with the text entry field and output together with the text data.

5. The character input assist method according to claim 1, wherein in the output step, a program for searching conversion candidates for characters input in the text entry field of the text data from a dictionary specified by the dictionary information is embedded in the text data.

6. The character input assist method according to claim 1, wherein in the output step, the dictionary information is output as data separate from the text data.

7. The character input assist method according to claim 1, wherein in the class acquisition step, the class information is acquired from text data in HTML format.

8. The character input assist method according to claim 1, further comprising a dictionary search step of searching and outputting conversion candidates for characters input in the text entry field of the text data from a dictionary specified by the dictionary information output in the output step.

9. The character input assist method according to claim 1, further comprising an output request reception step of receiving an output request for text data sent from a user terminal, wherein
in the class acquisition step, the class information is acquired from the text data relating to the output request received in the output request reception step, and
in the output step, the dictionary information acquired in the reference step is output to the user terminal that has sent the output request.

10. The character input assist method according to claim 9, wherein
in the output request reception step, information indicating an attribute of a user of the user terminal (300) is received together with the text data output request, and
in the reference step, dictionary information corresponding to the class information is acquired with reference to information stored in the storage means (40), based on the information indicating the user attribute that is received in the output request reception step.

11. The character input assist method according to claim 10, wherein a history of output requests of the text data from the user terminal (300) that are received in the output request reception step is taken as the information indicating the user attribute.

12. The character input assist method according to claim 9, wherein
in the output request reception step, position information of the user terminal (300) is received together with the text data output request, and
in the reference step, dictionary information corresponding to the class information is acquired with reference to information stored in the storage means (40) , based on the position information received in the output request reception step.

13. The character input assist method according to claim 1, wherein
the storage means (40) stores information specifying the output sequence of words contained in the dictionary,
in the reference step, information stored in the storage means (40) and specifying an output sequence of words contained in the dictionary specified by the acquired dictionary information is acquired, and
in the output step, information specifying the output sequence of words contained in the dictionary specified by the dictionary information is output.

14. The character input assist method according to claim 13, further comprising an output request reception step of receiving an output request for text data that is sent from a user terminal (300), wherein
in the class acquisition step, the class information is acquired from the text data relating to the output request received in the output request reception step, and
in the output step, information specifying the output sequence of words contained in the dictionary specified by the dictionary information is output to the user terminal that has sent the output request.

15. The character input assist method according to claim 14, wherein
in the output request reception step, information indicating an attribute of a user of the user terminal is acquired, and
in the reference step, information specifying the output sequence of words contained in the dictionary specified by the dictionary information is created based on the information indicating the user attribute acquired in the output request reception step.

16. The character input assist method according to claim 15, wherein a history of output requests of the text data from the user terminal (300) that are received in the output request reception step is taken as the information indicating the user attribute.

17. The character input assist method according to claim 14, wherein
in the output request reception step, position information of the user terminal is received together with the text data output request, and
in the reference step, information specifying the output sequence of words contained in the dictionary specified by the dictionary information is created based on the position information received in the output request reception step.

18. The character input assist method according to claim 12, wherein in the dictionary search step, conversion candidates for characters input in the text entry field are searched from the dictionary and output based on the information specifying the output sequence.

19. A character input assist system that assists in dictionary-using conversion of characters input in a text entry field of text data, the character input assist system comprising:
storage means (40) for storing information indicating a relationship between class information indicating a class of the text entry field and dictionary information specifying a dictionary to be used for converting the characters input in the text entry field;
class acquisition means (21) for acquiring the class information from the text data;
reference means (22) for acquiring dictionary information corresponding to the class information with reference to information stored in the storage means based on the class information acquired by the class acquisition means; and
output means (23) for outputting the dictionary information acquired by the reference means.

20. A character input assist program for assisting in dictionary-using conversion of characters input in a text entry field of text data and causing a computer to function as:
storage means (40) for storing information indicating a relationship between class information indicating a class of the text entry field and dictionary information specifying a dictionary to be used for converting the characters input in the text entry field;
class acquisition means (21) for acquiring the class information from the text data;
reference means (28) for acquiring dictionary information corresponding to the class information with reference to information stored in the storage means based on the class information acquired by the class acquisition means; and
output means (23) for outputting the dictionary information acquired by the reference means.

21. A user terminal comprising:
text acquisition means for acquiring text data having a text entry field and dictionary information specifying a dictionary to be used for converting characters input in the text entry field; and
dictionary search means (32) for searching and outputting conversion candidates for characters input in the text entry field of text data acquired by the text acquisition means from a dictionary specified by the dictionary information acquired by the text acquisition means.

22. The user terminal according to claim 21, wherein the dictionary search means (32) searches an external dictionary specified by the dictionary information.

23. A character conversion method for performing dictionary-using conversion of characters input in a text entry field of text data in a user terminal, the method comprising:
a text acquisition step of acquiring text data having a text entry field and dictionary information specifying a dictionary to be used for converting characters input in the text entry field; and
a dictionary search step (32) of searching and outputting conversion candidates for characters input in the text entry field of text data acquired in the text acquisition step from a dictionary specified by the dictionary information acquired in the text acquisition step.

24. A character conversion program for performing dictionary-using conversion of characters input in a text entry field of text data in a user terminal, and causing a computer to function as:
text acquisition means for acquiring text data having a text entry field and dictionary information specifying a dictionary to be used for converting characters input in the text entry field; and
dictionary search means (32) for searching and outputting conversion candidates for characters input in the text entry field of text data acquired by the text acquisition means from a dictionary specified by the dictionary information acquired by the text acquisition means.
